# EUROPÄISCHE PATENTSCHRIFT

(11) **EP 3 397 551 B1**
(45) Veröffentlichungstag und Bekanntmachung des Hinweises auf die Patenterteilung: **10.07.2019**
(21) Anmeldenummer: 16828916.3
(22) Anmeldetag: 30.12.2016
(51) Int. Cl.: B64C 11/00, B64C 27/22, B64C 39/00

(54) **FLUGGERÄT**
AIRCRAFT
AÉRONEF

(30) Priorität: 30.12.2015 AT 511132015
(43) Veröffentlichungstag der Anmeldung: 07.11.2018
(73) Patentinhaber: CycloTech GmbH, 4030 Linz (AT)
(72) Erfinder: SCHWAIGER, Meinhard, 4040 Linz (AT)
(74) Vertreter: Bosch Jehle Patentanwaltsgesellschaft mbH
(86) Internationale Anmeldenummer: PCT/AT2016/060137
(87) Internationale Veröffentlichungsnummer: WO 2017/112973

(56) Entgegenhaltungen:
- EP-A1- 2 511 177
- EP-A1- 2 690 011
- DE-A1-102004 007 682
- GB-A- 480 750
- US-A- 5 265 827
- US-A1- 2005 082 422

## Beschreibung

Die Erfindung betrifft ein Fluggerät, ausgeführt als Compound-Helikopter mit einem Fluggeräterumpf, einem am Fluggeräterumpf angeordneten Hauptrotor und mit seitlich vom Fluggeräterumpf abstehenden Cyclogyro-Rotoren mit einer äußeren Stirnfläche.

Als Cyclogyro-Rotoren werden allgemein zylindrische Körper bezeichnet, die um ihre Achse drehbar gelagert sind und an deren Umfang schwenkbare Rotorblätter angeordnet sind, die im Betrieb durch eine Offsetverstelleinrichtung zyklisch verstellt werden. Dadurch kann je nach Verstellung der Rotorblätter Schub in jede Richtung senkrecht zur Achse erzeugt werden.

Dem Stand der Technik entsprechen Compound- (Hybrid-) Helikopter, bestehend aus einem Fluggeräterumpf, einem einzelnen Hauptrotor bzw. einem gegenläufigen Tandemrotor, einem oder mehreren Propellereinheiten für den Drehmomentausgleich und zur Schuberzeugung im Vorwärtsflug sowie zusätzlichen Tragflügeleinheiten zur Erzeugung eines vertikalen Auftriebs im Vorwärtsflug. Des Weiteren sind Helikopter-Konfigurationen mit einem oder zwei Cyclogyro-Rotoren bekannt.

Bei der aus dem Stand der Technik bekannten lateralen Anordnung von zwei Rotoren unterhalb des Hauptrotors jeweils links und rechts vom Helikopterrumpf sind die Cyclogyro-Rotoren ausschließlich über die Rotorachse mit dem Helikopterrumpf verbunden. Dadurch treten an der Lagerung am Fluggeräterumpf und in der Rotorachse hohe Kräfte und Momente auf. Überdies ist die zyklische Verstellung der Rotorblätter über eine einseitige Offsetverstelleinrichtung problematisch, da bei den erforderlich hohen Rotordrehzahlen enorme Zentrifugalkräfte erzeugt werden und bei einseitig eingeleiteter zyklischer Rotorblattanlenkung zusätzliche Torsionsmomente das Rotorblatt überproportional belasten.

In der Folge werden weitere bekannte Lösungen in Zusammenhang mit dem Drehmomentausgleich bei Helikoptern diskutiert.

Aus der EP 2 690 011 A (Axel Fink) ist eine Fluggerätekonfiguration bekannt, die mit einem Fluggeräterumpf, an dem ein Hauptrotor annähernd im Massenschwerpunkt vorgesehen ist und mit zwei Tragflügeln ausgeführt ist, an denen jeweils rückwärts ein Schub-Propeller starr in Flugrichtung angeordnet ist. Die Tragflügel sind mit dem Fluggeräterumpf mittels Streben starr verbunden. Anstelle eines Heckrotors befindet sich ein Höhen- und Seitenleitwerk. Der Vertikalauftrieb wird bei Start und Landung sowie im Schwebezustand ausschließlich vom Hauptrotor erzeugt, während die beiden zusätzlichen Propeller den Drehmomentausgleich und den Schub im Vorwärtsflug erzeugen. Eine ähnliche Fluggerätekonfigurationen ist aus der US 3,385,537 A bekannt.

Aus der EP 2 690 010 A (Axel Fink) ist eine Fluggerätekonfiguration bekannt, die mit einem Fluggeräterumpf, an dem ein Hauptrotor annähernd im Massenschwerpunkt vorgesehen ist und mit zwei Tragflügeln, die über einen Doppelrumpf nach hinten mit dem Höhen- und Seitenleitwerk verbunden sind, wobei an den hinteren Enden der Doppelrümpfe jeweils ein Schub-Propeller starr angeordnet ist. Die Tragflügel sind mit dem Fluggeräterumpf starr verbunden. Der Vertikalauftrieb wird bei Start und Landung sowie im Schwebezustand ausschließlich vom Hauptrotor erzeugt, während die beiden zusätzlichen Propeller den Drehmomentausgleich und den Schub im Vorwärtsflug erzeugen.

Aus der EP 2 690 012 A (Axel Fink) ist eine Fluggerätekonfiguration bekannt, die mit einem Fluggeräterumpf, an dem ein Hauptrotor annähernd im Massenschwerpunkt vorgesehen ist und mit vier Tragflügeln ausgeführt ist, an deren vorderen beiden Enden jeweils ein schwenkbar ausgeführter Mantelpropeller (ducted fan) angeordnet ist. Die Tragflügel sind mit dem Fluggeräterumpf starr verbunden. Der Vertikalauftrieb wird bei Start und Landung sowie im Schwebezustand vom Hauptrotor erzeugt und von den beiden Mantelpropellern unterstützt, die ebenfalls den Drehmomentausgleich und den Schub im Vorwärtsflug erzeugen. Die hinteren Tragflächen sind mit Höhen- und Seitenruder, die vorderen Tragflächen mit Querruder ausgeführt.

Aus der EP 2 666 718 A (Paul Eglin) ist eine Fluggerätekonfiguration bekannt, die mit einem Fluggeräterumpf, an dem ein Hauptrotor annähernd im Massenschwerpunkt vorgesehen ist und mit zwei Tragflügeln und einem Höhenleitwerk ausgeführt ist, wobei an den vorderen Enden der Tragflügel Propeller starr in Flugrichtung angeordnet sind. Die Tragflügel sind mit dem Fluggeräterumpf starr verbunden. Der Vertikalauftrieb wird bei Start und Landung sowie im Schwebezustand ausschließlich vom Hauptrotor erzeugt, während die beiden zusätzlichen Propeller den Drehmomentausgleich und den Schub im Vorwärtsflug erzeugen.

Aus der EP 2 146 895 A (Philippe Roesch) ist eine Fluggerätekonfiguration bekannt, die mit einem Fluggeräterumpf, an dem ein Hauptrotor annähernd im Massenschwerpunkt vorgesehen ist und mit zwei Tragflügeln und einem Höhen-und Seitenleitwerk ausgeführt ist, wobei an den vorderen Enden der Tragflügel Propeller starr in Flugrichtung angeordnet sind. Die Tragflügel sind mit dem Fluggeräterumpf starr verbunden. Der Vertikalauftrieb wird bei Start und Landung sowie im Schwebezustand ausschließlich vom Hauptrotor erzeugt, während die beiden zusätzlichen Propeller den Drehmomentausgleich und den Schub im Vorwärtsflug erzeugen.

Aus der EP 2 105 378 A (Jean-Jaques Ferrier) ist eine Fluggerätekonfiguration bekannt, die mit einem Fluggeräterumpf, an dem ein Hauptrotor annähernd im Massenschwerpunkt vorgesehen ist und mit vier Tragflügeln ausgeführt ist, wobei an den hinteren größeren Tragflächen rückwärts jeweils ein Schub-Propeller starr in Flugrichtung angeordnet ist. Die Tragflügel sind mit dem Fluggeräterumpf starr verbunden. Der Vertikalauftrieb wird bei Start und Landung sowie im Schwebezustand ausschließlich vom Hauptrotor erzeugt, während die beiden zusätzlichen Propeller den Drehmomentausgleich und den Schub im Vorwärtsflug erzeugen. Die Tragflügel sind zusätzlich mit Höhenruder ausgeführt.

Aus der DE 10 2012 002 256 A (Felix Fechner) ist ein Fluggerät bekannt, das als Helikopter mit zusätzlichen Tragflächen ausgeführt ist, wobei diese Tragflächen schwenkbar oder segmentiert ausgeführt sind und dadurch im Schwebe- bzw. Langsamflug eine Verringerung der Behinderung des Rotorabwindes erzeugen und eine höhere Fluggeschwindigkeit ermöglichen. Der Vertikalauftrieb wird bei Start und Landung sowie im Schwebezustand ausschließlich vom Hauptrotor erzeugt.

Aus der RU 2 500 578 A (Nikolaevich Pavlov Sergej) ist eine Fluggerätekonfiguration bekannt, die mit einem Fluggeräterumpf, an dem ein Hauptrotor annähernd im Massenschwerpunkt vorgesehen ist, mit zwei im vorderen Bereich seitlich zum Fluggeräterumpf parallel zur Flugrichtung angeordneten Propellereinheiten für den Vorwärtsschub und mit zwei schwenkbaren Tragflügeln, als Höhenleitwerk, und einem Seitenleitwerk im hinteren Bereich ausgeführt ist. Der Vertikalauftrieb wird bei Start und Landung sowie im Schwebezustand ausschließlich vom Hauptrotor erzeugt, während die beiden zusätzlichen Propeller den Drehmomentausgleich und den Schub im Vorwärtsflug erzeugen.

Aus der US 2013 0327879 A (Mark W. Scott) ist eine Fluggerätekonfiguration bekannt, die als Helikopter mit einem Hauptrotor und mit einem Heckrotor, der um eine Drehachse, annähernd parallel zur Hauptrotordrehachse, geschwenkt werden kann, ausgeführt ist. Der schwenkbare Heckrotor stabilisiert das Fluggerät im Schwebezustand und kann zusätzlich einen Horizontalschub in Flugrichtung erzeugen, während der Vertikalauftrieb bei Start und Landung sowie im Schwebezustand ausschließlich vom Hauptrotor erzeugt wird.

Aus der US 2006 0169834 A (Allen A. Arata) ist eine Fluggerätekonfiguration bekannt, die als Helikopter mit einem Hauptrotor und mit einem Heckrotor, und mit zwei zusätzlichen Tragflächen ausgeführt ist. Die Tragflächen sind starr am Fluggeräterumpf unterhalb des Hauptrotors angeordnet und sind in ca. der Mitte ihrer Länge um 90° nach unten parallel zur Fluggeräteachse schwenkbar und dienen in dieser Stellung als Landegestell bzw. Fahrwerk. Der Vertikalauftrieb wird bei Start und Landung sowie im Schwebezustand ausschließlich vom Hauptrotor erzeugt, während im Vorwärtsflug ein zusätzlicher Auftrieb von den beiden ausgestreckten Tragflächen erzeugt wird.

Aus der WO 2005/005250 A (Arthur W. Loper) ist eine Fluggerätekonfiguration bekannt, die als Helikopter mit einem Hauptrotor, einem Heckrotor, einem Propeller an der Stirnseite des Helikopters, mit zwei zusätzlichen Tragflächen und mit einem Höhen- und Seitenleitwerk ausgeführt ist. Die Tragflächen sind starr am Fluggeräterumpf unterhalb des Hauptrotors angeordnet. Der Vertikalauftrieb wird bei Start und Landung sowie im Schwebezustand ausschließlich vom Hauptrotor erzeugt, während im Vorwärtsflug ein zusätzlicher Auftrieb von den beiden Tragflächen erzeugt wird. Der stirnseitige Propeller erzeugt den Schub für den Vorwärtsflug.

Aus der US 2006 0157614 A (John S. Pratt) ist ein Fluggerät bekannt, ausgeführt als Helikopter mit mehreren zusätzlichen Tragflächen unterhalb des Hauptrotors, wobei diese Tragflächen segmentiert und schwenkbar ausgeführt sind und dadurch im Schwebe- bzw. Langsamflug eine Verringerung der Behinderung des Rotorabwindes erzeugen und eine höhere Fluggeschwindigkeit ermöglichen. Der Vertikalauftrieb wird bei Start und Landung sowie im Schwebezustand ausschließlich vom Hauptrotor erzeugt und im schnellen Vorwärtsflug unterstützen die zusätzlichen Tragflächen den Vertikalauftrieb. Der Drehmomentausgleich erfolgt über die individuelle Anstellung der segmentierten Tragflächen über den Abwind des Hauptrotors und ein Heckrotor ist nicht vorhanden.

Aus der FR 9 803 946 A (Paul Julien Alphonse) ist eine Fluggerätekonfiguration bekannt, die als Helikopter mit einem Hauptrotor, einem Heckrotor, einem Propeller an der Rückseite des Helikopters, mit zwei zusätzlichen Tragflächen und mit einem Höhen- und Seitenleitwerk ausgeführt ist. Die Tragflächen sind starr am Fluggeräterumpf außerhalb des Hauptrotors angeordnet. Der Vertikalauftrieb wird bei Start und Landung sowie im Schwebezustand ausschließlich vom Hauptrotor erzeugt, während im Vorwärtsflug ein zusätzlicher Auftrieb von den beiden Tragflächen erzeugt wird. Der rückseitige Propeller erzeugt den Schub für den Vorwärtsflug.

Aus der US 5,738,301 A (Daniel Claude Francois) ist eine Fluggerätekonfiguration bekannt, die als Helikopter mit einem Hauptrotor, einem Heckrotor, einem Propeller an der Rückseite des Helikopters, mit zwei zusätzlichen Tragflächen und mit einem Höhen- und Seitenleitwerk ausgeführt ist. Die Tragflächen sind starr am Fluggeräterumpf unterhalb des Hauptrotors angeordnet. Der Vertikalauftrieb wird bei Start und Landung sowie im Schwebezustand ausschließlich vom Hauptrotor erzeugt, während im Vorwärtsflug ein zusätzlicher Auftrieb von den beiden Tragflächen erzeugt wird. Der rückseitige Propeller erzeugt den Schub für den Vorwärtsflug.

Aus der US 5,174,523 A (David E. H. Balmford) ist eine Fluggerätekonfiguration bekannt, die als Helikopter mit einem Hauptrotor, einem Propeller mit Strömungsleiteinrichtung an der Rückseite des Helikopters und mit zwei zusätzlichen Tragflächen ausgeführt ist. Die Tragflächen sind starr am Fluggeräterumpf unterhalb des Hauptrotors angeordnet. Der Vertikalauftrieb wird bei Start und Landung sowie im Schwebezustand ausschließlich vom Hauptrotor erzeugt, während im Vorwärtsflug ein zusätzlicher Auftrieb von den beiden Tragflächen erzeugt wird. Der rückseitige Propeller erzeugt den Schub für den Vorwärtsflug und den Drehmomentausgleich über die Strömungsleiteinrichtung.

Aus der RU 2 089 456 A (Mikhail Il'ich Fefer) ist eine Fluggerätekonfiguration bekannt, die als Helikopter, mit zwei im mittleren Bereich des Rumpfes angeordneten Tragflächen an deren Enden jeweils ein Hauptrotor starr angeordnet ist. Die Tragflächen sind starr am Fluggeräterumpf unterhalb des jeweiligen Hauptrotors angeordnet. Der Vertikalauftrieb wird bei Start und Landung sowie im Schwebezustand ausschließlich vom Hauptrotor erzeugt, während im Vorwärtsflug ein zusätzlicher Auftrieb von den beiden Tragflächen erzeugt wird.

Aus der US 5,067,668 A (Daniel R. Zuck) ist ein Fluggerät bekannt, ausgeführt als Helikopter mit zusätzlichen Tragflächen unterhalb des Hauptrotors, wobei diese Tragflächen schwenkbar ausgeführt sind und dadurch im Schwebe- bzw. Langsamflug den Drehmomentausgleich ermöglichen und dadurch der Heckrotor als Drehmomentausgleich entfällt. Der im Heck angeordnete Propeller dient ausschließlich als Schuberzeuger für den Vorwärtsflug. Der Vertikalauftrieb wird bei Start und Landung sowie im Schwebezustand ausschließlich vom Hauptrotor erzeugt.

Aus der US 4,928,907 (Daniel R. Zuck) ist ein Fluggerät bekannt, ausgeführt als Helikopter mit zusätzlichen Tragflächen unterhalb des Hauptrotors, wobei diese Tragflächen schwenkbar ausgeführt sind und dadurch im Schwebe- bzw. Langsamflug den Drehmomentausgleich ermöglichen und dadurch der Heckrotor als Drehmomentausgleich entfällt. Ein im Heck angeordneter Propeller dient ausschließlich als Schuberzeuger für den Vorwärtsflug. Der Vertikalauftrieb wird bei Start und Landung sowie im Schwebezustand ausschließlich vom Hauptrotor erzeugt.

Aus US 4,691,877 A (Ralph M. Denning) bzw. GB 2143483 (John Denman Sibley) ist ein Fluggerät bekannt, ausgeführt als Helikopter mit zusätzlichen Tragflächen unterhalb des Hauptrotors und an den Tragflügeln sind schwenkbare Klappen angeordnet, die vom Hauptantrieb mit dem Abgas des Nachbrenners umströmt werden. Die Tragflügel sind mit dem Fluggeräterumpf starr verbunden. Der Vertikalauftrieb wird bei Start und Landung sowie im Schwebezustand vom Hauptrotor und der Abgasströmung von den beiden Nachbrennern erzeugt, diese können auch den Drehmomentausgleich und einen zusätzlichen Schub im Vorwärtsflug erzeugen.

Aus der US 3,977,812 A (Wayne A. Hudgins) ist eine Fluggerätekonfiguration bekannt, die als Helikopter mit einem Hauptrotor, einem Heckrotor, einem Propeller an der Rückseite des Helikopters und mit zwei zusätzlichen Tragflächen ausgeführt ist. Die Tragflächen sind starr am Fluggeräterumpf unterhalb des Hauptrotors angeordnet. Der Vertikalauftrieb wird bei Start und Landung sowie im Schwebezustand ausschließlich vom Hauptrotor erzeugt, während im Vorwärtsflug ein zusätzlicher Auftrieb von den beiden Tragflächen erzeugt wird. Der rückseitige Propeller erzeugt den Schub für den Vorwärtsflug.

Aus der CA 825 030 A (Nagatsu Teisuke) bzw. US 3,448,946 A (Nagatsu Teisuke) ist eine Fluggerätekonfiguration bekannt, die als Helikopter mit einem Hauptrotor, einem Heckrotor, einem Propeller an der Rückseite des Helikopters, mit einem Höhen- und Seitenleitwerk und wahlweise mit zwei zusätzlichen Tragflächen ausgeführt ist. Die Tragflächen sind starr am Fluggeräterumpf unterhalb des Hauptrotors angeordnet. Der Vertikalauftrieb wird bei Start und Landung sowie im Schwebezustand ausschließlich vom Hauptrotor erzeugt, während im Vorwärtsflug ein zusätzlicher Auftrieb von den beiden Tragflächen erzeugt wird. Der rückseitige Propeller erzeugt den Schub für den Vorwärtsflug.

Aus der Veröffentlichung von C. Silva und H. Yeo, Aeroflightdynamics Directorate, U.S. Army RDECOM und W. Johnson, NASA Ames Research Center: "Design of a Slowed-Rotor Compound Helicopter for Future Joint Service Missions" Aeromech Conference, San Franciso, CA, Jan 2010, ist eine Fluggerätekonfiguration bekannt, die als Helikopter mit einem Hauptrotor, einem Heckrotor, einem Propeller an der Rückseite des Helikopters, mit einem Höhen- und Seitenleitwerk und mit zwei zusätzlichen Tragflächen ausgeführt ist. Die Tragflächen sind starr am Fluggeräterumpf unterhalb des Hauptrotors angeordnet. Der Vertikalauftrieb wird bei Start und Landung sowie im Schwebezustand ausschließlich vom Hauptrotor erzeugt, während im Vorwärtsflug ein zusätzlicher Auftrieb von den beiden Tragflächen erzeugt wird. Der rückseitige Propeller erzeugt den Schub für den Vorwärtsflug.

Aus der US 3,563,496 A (Daniel R. Zuck) ist eine Fluggerätekonfiguration bekannt, die als Helikopter mit einem Hauptrotor, einem Heckrotor, einem Propeller an der Rückseite des Helikopters, mit einem Höhen- und Seitenleitwerk und mit zwei zusätzlichen schwenkbaren Tragflächen ausgeführt ist. Die Tragflächen sind schwenkbar am Fluggeräterumpf unterhalb des Hauptrotors angeordnet. Der Vertikalauftrieb wird bei Start und Landung sowie im Schwebezustand ausschließlich vom Hauptrotor erzeugt, während im Vorwärtsflug ein zusätzlicher Auftrieb von den beiden Tragflächen erzeugt wird. Der rückseitige Propeller erzeugt den Schub für den Vorwärtsflug, der Heckrotor erzeugt den Drehmomentausgleich.

Aus der US 3,241,791 A (F. N. Piasecki) ist eine Fluggerätekonfiguration bekannt, die als Helikopter mit einem Hauptrotor, einem Mantelpropeller an der Rückseite des Helikopters, mit zwei zusätzlichen Tragflächen am Fluggeräterumpf unterhalb des Hauptrotors angeordnet und einer Strömungsleiteinrichtung am Ausgang des Mantelpropellers ausgeführt ist. Der Vertikalauftrieb wird bei Start und Landung sowie im Schwebezustand ausschließlich vom Hauptrotor erzeugt, während im Vorwärtsflug ein zusätzlicher Auftrieb von den beiden Tragflächen erzeugt wird. Der rückseitige Mantelpropeller mit Strömungsleiteinrichtung erzeugt den Schub für den Vorwärtsflug und den Drehmomentausgleich.

Aus der CA 700 587 A und US 3,105,659 A (Richard G. Stutz) ist eine Fluggerätekonfiguration bekannt, die als Helikopter mit einem Hauptrotor, einem Heckrotor, einem Höhenleitwerk und mit zwei zusätzlichen starren Tragflächen mit Querruderklappen und Propellern ausgeführt ist. Die Tragflächen sind am Fluggeräterumpf unterhalb des Hauptrotors angeordnet. Der Vertikalauftrieb wird bei Start und Landung sowie im Schwebezustand ausschließlich vom Hauptrotor erzeugt, während im Vorwärtsflug ein zusätzlicher Auftrieb von den beiden Tragflächen erzeugt wird. Der Heckrotor erzeugt den Drehmomentausgleich und die beiden Propeller erzeugen den Schub im Vorwärtsflug.

Aus der EP 2 511 177 A1 (Eurocopter Deutschland) ist ein Hubschrauber mit einem Hauptrotor, einem Zykloidenrotor und einem Drehzylinder bekannt. Der rotierende Zylinder erstreckt sich entlang einer Längsachse eines Heckauslegers. Der Zykloidenrotor erstreckt sich mindestens teilweise entlang des gleichen Heckauslegers und dreht sich außerhalb des Drehzylinders.

Nachteilig bei allen diesen bekannten Compound-Helikopter Fluggerätekonfigurationen, die mit klassischen Schuberzeugern wie Propeller ausgeführt sind, ist, dass der Vertikalauftrieb für Start und Landung sowie im Schwebezustand ausschließlich bzw. überwiegend vom Hauptrotor erzeugt wird und ein entsprechend großer Hauptrotordurchmesser erforderlich ist. Im Vorwärtsflug erzeugt der große Hauptrotor den größten Strömungswiderstand und verursacht den größten Energieverlust. Die zusätzlichen Antriebsaggregate, wie Propeller bzw. Mantelpropeller ermöglichen zwar höhere Fluggeschwindigkeiten und verbesserte Manövrierfähigkeiten, jedoch wird mit zunehmender Fluggeschwindigkeit die Effizienz verringert und der Energieverbrauch überproportional erhöht.

Nachteilig bei den bekannten Compound-Helikopter Fluggerätekonfigurationen mit Cyclogyro-Rotoren ist, dass bei der bekannten lateralen Anordnung der Cyclogyro-Rotoren die Aerodynamik beeinflussende Rotarscheiben und Tragelemente fehlen und die zyklische Rotorblattverstellung durch eine rotierende Rotorachse durchgeführt werden muss bzw. nur von jeweils der dem Flugzeugrumpf zugewandten Seite erfolgen kann, bei der bekannten horizontalen Anordnung als Heckrotor kein Beitrag zur Erzeugung einer Schubkraft in Flugrichtung erzeugt werden kann und der Durchströmquerschnitt im Rotor massiv von der Helikopterstruktur verringert wird und bei der vertikalen Anordnung als Heckrotor kein Beitrag zur vertikalen Schuberzeugung geleistet werden kann.

Aus der US 5,100,080 A, der US 5,265,827 A und der US 2007 /0200029 A1 sind Fluggeräte mit Cyclogyro-Rotoren mit verstellbaren Rotorblättern bekannt. Kombinationen mit Hauptrotoren sind darin nicht angegeben. Die Vorteile eines Helikopters können daher nicht ausgenutzt werden.

Die GB 480 750 A (George W. Walton) betrifft einen Cyclogyro-Rotor, der einen Backbord- und einen Steuerbordrotor aufweist. Jeder Rotor weist einen drehbaren Schaufelträger auf, an dem eine Mehrzahl von Flügeln angebracht sind, die um die Rotorachse verteilt sind und jeweils um Achsen parallel oder nahezu parallel zur Rotorachse beweglich sind.

Aus der US 2005/082422 A1 (Tierney Glenn M) ist ein System zum Bewegen eines Luftfahrzeugs entlang einer Flugbahn bekannt, das drehbare Naben umfasst, die an gegenüberliegenden Seiten des Fahrzeugs angebracht sind. Langgestreckte Tragflächen sind an den Naben parallel zu einer gemeinsamen Nabenachse zur Rotation um die Nabenachse auf einem Schaufelweg angebracht. Jedes Schaufelblatt definiert eine Sehnenlinie und das System umfasst eine Zahnradanordnung, die während der Nabendrehung zwischen einer ersten Modalität, bei der Tragflügelsehnenlinien tangential zum Schaufelweg bleiben (kurzer Flug), und einer zweiten Modalität, bei der Tragflügelsehnenlinien parallel zum Flugpfad bleiben (langer Flug), veränderbar ist. Außerdem kann die Rotation der Nabe gestoppt werden und die Tragflächen für den Flug mit festen Flügeln verwendet werden.

Aus der DE 10 2004 007682 A1 (IP2H AG) ist ein Luftfahrzeug mit einem Rumpf und einer mit dem Rumpf gekoppelten Antriebseinrichtung zur Erzeugung eines definierbaren Auftriebs bekannt, wobei die Antriebseinrichtung mehrere Flügelblätter aufweist und wobei die Flügelblätter um einen vorgebbaren Blattwinkel um eine Schwenkachse verschwenkbar sind. Das Luftfahrzeug ist derart ausgestaltet, dass die Flügelblätter um eine Rotationsachse drehbar gelagert sind, dass der Blattwinkel zur Erzeugung des Auftriebs während der Drehung veränderbar ist und dass die jeweiligen Schwenkachsen der Flügelblätter im Wesentlichen parallel zur Rotationsachse angeordnet sind.

Aufgabe der vorliegenden Erfindung ist es, ein neuartiges Fluggerät auf Basis eines Helikopters zu definieren, das die vorhin beschriebenen Nachteile vermeidet, ohne die zusätzlichen Vorteile zu verlieren.

Erfindungsgemäß wird diese Aufgabe dadurch gelöst, dass die Cyclogyro-Rotoren mit einer Aufhängevorrichtung mit dem Fluggeräterumpf verbunden sind, die die Cyclogyro-Rotoren an ihrer äußeren Begrenzung hält, und dass jeder Cyclogyro-Rotor einzeln und unabhängig vom anderen steuerbar ist und von den Cyclogyro-Rotoren ein Drehmomentausgleich des Hauptrotors durchführbar ist.

Es handelt sich dabei um einen Helikopter, der mit zwei zusätzlichen lateral angeordneten Cyclogyro-Rotoren ausgestattet ist, die unabhängig voneinander in einer Ebene, im Wesentlichen parallel zur Drehachse des Hauptrotors und zur Längsachse des Helikopters, einen in jede Richtung steuerbaren Schubvektor erzeugen und somit den Drehmomentausgleich des Hauptrotors in allen Flugsituationen übernehmen können, im vertikalen Start-, Lande- und Schwebezustand den vertikalen Schub des Hauptrotors ergänzen, den sicheren Übergang vom Schwebezustand in den Vorwärtsflug unterstützen und im Vorwärtsflug den erforderlichen Schub erzeugen. Aufgrund der Unterstützung des Vertikalschubs des Hauptrotors kann der Hauptrotor gegenüber dem klassischen Helikopter und allen bekannten Compound-(Hybrid-) Helikoptern im Durchmesser kleiner ausgeführt werden, sodass im Vorwärtsflug eine höhere Effizienz bzw. bei vergleichbarer Antriebsleistung eine höhere Geschwindigkeit erreicht werden kann. Ein Heckrotor im klassischen Sinne entfällt.

Dabei werden lateral zwei Cyclogyro-Rotoren mittels einer Tragvorrichtung bzw. mit Tragelementen derart mit dem Flugzeugrumpf verbunden, dass die vom Cyclogyro-Rotor erzeugten Schubkräfte in den Flugzeugrumpf eingeleitet werden können, so dass eine wesentlich leichtere Konstruktion erzielt werden kann. Außerdem wird durch die unabhängig voneinander steuerbaren Cyclogyro-Rotoren der Drehmomentausgleich übernommen, so dass kein Heckrotor notwendig ist, was eine zusätzliche Gewichtsreduktion ermöglicht.

Die Verbindung der Aufhängevorrichtung mit dem Flugzeugrumpf kann auch indirekt über andere Bauteile erfolgen.

Wesentlich ist die beidseitige Lagerung der Cyclogyro-Rotoren in der Aufhängevorrichtung, die nicht nur eine leichtere, robustere Konstruktion ermöglicht, sondern auch eine beidseitige Verstellung der Rotorblätter möglich macht.

In einer besonderen Ausführungsvariante der Erfindung sind die für die zyklische Rotorblattanstellung erforderlichen Offsetverstelleinrichtungen an beiden Seiten des Cyclogyro-Rotors angeordnet, wodurch sich eine die kritischen Rotorbauteile am geringsten belastende, leichte und robuste Konstruktion ergibt. Die Einleitung des Drehmoments in den Cyclogyro-Rotor erfolgt an der dem Fluggeräterumpf zugewandten Seite des Cyclogyro-Rotors.

Durch die bevorzugte Anordnung der Cyclogyro-Rotoren unterhalb des Hauptrotors kann dieser wesentlich verkleinert werden, da die Erzeugung des Vertikalschubes für das senkrechte Starten, Landen und für den Schwebezustand durch zwei lateral am Fluggeräterumpf unterhalb des Hauptrotors angeordnete Cyclogyro-Rotoren unterstützt wird. Ein Cyclogyro-Rotor erzeugt einen Schubvektor, der in einer Ebene senkrecht zur Drehachse des Rotors in jede beliebige Richtung gesteuert und von 0 bis zu einem Maximalwert stufenlos durch Veränderung eines zyklischen Anstellwinkels der rotierenden Rotorblätter, als Funktion der Verschiebung einer Offsetposition innerhalb des rotierenden Cyclogyro-Rotors, geregelt werden kann. Durch die laterale Anordnung derartiger Rotoren an jeweils einer Seite des Fluggeräterumpfes und der uneingeschränkten Richtungsänderung der Schubvektoren erzeugen diese Rotoren darüber hinaus den Drehmomentausgleich des Hauptrotors, weshalb bei dieser Konfiguration ein Heckrotor nicht erforderlich ist. Die erfindungsgemäße Konfiguration ermöglicht einen senkrechtstartenden Helikopter, der bei gleicher Tragleistung einen geringeren Energieverbrauch aufweist, der einen kleineren Hauptrotordurchmesser aufweist und somit auf kleinerem Raum starten bzw. landen kann, der keinen Heckrotor benötigt und eine höhere Fluggeschwindigkeit bei vergleichsweise geringerem Energieverbrauch erreicht. Der erfindungsgemäße Compound-Helikopter hat auch das Potential einer höheren Reichweite bei gleicher Treibstoffbeladung. Ein weiterer Vorteil ist die höhere Agilität in nahezu allen Flugphasen.

Es ist bevorzugt, wenn die Aufhängevorrichtung als Tragflügel ausgeführt ist, um im Vorwärtsflug Auftrieb zu erzeugen. Dadurch kann einerseits die Belastung der Hauptrotors verringert werden und andererseits die Maximalgeschwindigkeit erhöht werden, da der Hauptrotor mit verringerter Drehzahl betrieben werden kann.

Dabei ist es besonders günstig, wenn die Aufhängevorrichtung oberhalb der Cyclogyro-Rotoren angeordnet ist. Auf diese Weise wird im Vorwärtsflug eine verbesserte Anströmung der Cyclogyro-Rotoren erreicht. Um die Wirkung des Hauptrotors auf die Cyclogyro-Rotoren zu verbessern, kann insbesondere vorgesehen sein, dass die Aufhängevorrichtung eine Ausnehmung unmittelbar oberhalb der Cyclogyro-Rotoren aufweist.

Vorzugsweise ist ein Höhen- und Seitenleitwerk zur Stabilisierung vorgesehen. Dies bedeutet insbesondere, dass keine separate Luftschraube vorgesehen ist um den Drehmomentausgleich zu bewerkstelligen, was durch die erfindungsgemäße Ausbildung auch nicht erforderlich ist.

Eine besondere Ausführungsvariante der Erfindung sieht vor, dass die Cyclogyro-Rotoren über ein Getriebe mit dem Antrieb des Hauptrotors in Verbindung stehen. Das bedeutet, dass die Drehzahlen von Hauptrotor und Cyclogyro-Rotoren stets in einem konstanten Verhältnis stehen. Der jeweils erforderliche Schub wird durch die Verstellung der Rotorblätter eingestellt. Dies ermöglicht einen sehr einfachen Antrieb.

Alternativ dazu kann vorgesehen sein, dass die Cyclogyro-Rotoren einen vom Hauptrotor unabhängigen Antrieb aufweisen, der elektrisch, hydraulisch oder als eigenes Antriebsaggregat ausgebildet ist. Dadurch kann der Schub in besonders weiten Grenzen variiert werden.

In einer besonders vorteilhaften Ausführung weist das Fluggerät keinen Heckrotor auf. Dadurch kann Gewicht eingespart werden und der Konstruktionsaufwand verringert sich.

Die Erfindung wird anhand der Figuren 1 bis 8 näher beschrieben. Es zeigen:
- Fig.1: einen erfindungsgemäßen Compound-Helikopter in Schrägansicht von oben;
- Fig. 2: den Helikopter von Fig. 1 in einer Ansicht von vorne;
- Fig. 3: den Helikopter von Fig. 1 in einer seitlichen Ansicht;
- Fig. 4: den Helikopter von Fig. 1 in einer Draufsicht;
- Fig. 5: einen Cyclogyro-Rotor in Schrägansicht;
- Fig. 6: den Cyclogyro-Rotor in Seitenansicht;
- Fig. 7: den Cyclogyro-Rotor in einer Ansicht von vorne;
- Fig. 8: eine Offsetverstelleinrichtung im Detail.

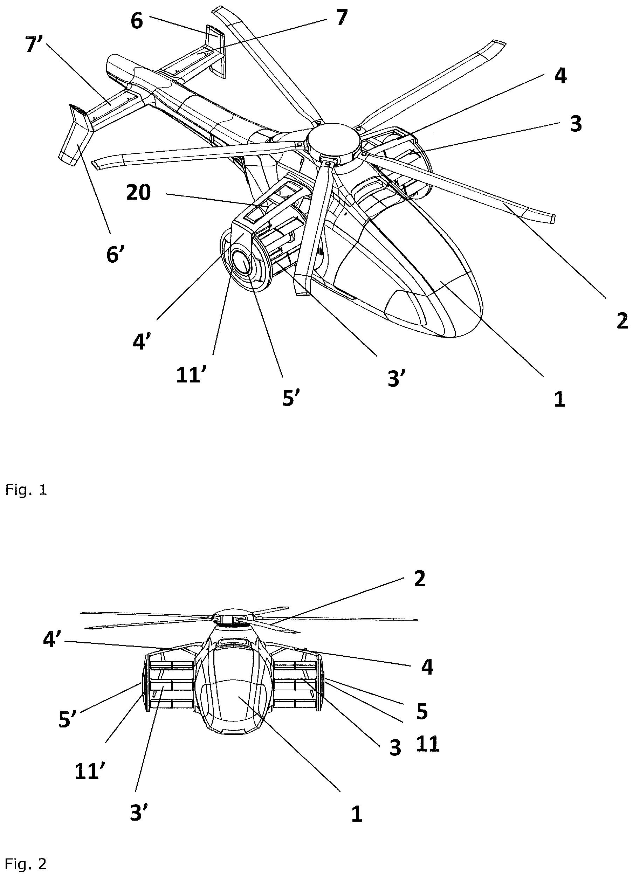

Fig. 1 zeigt ein erfindungsgemäßes Fluggerät, nämlich einen Compound-Helikopter in einer Schrägansicht von oben, bestehend aus dem Fluggeräterumpf 1, dem Hauptrotor 2, den lateral angeordneten Cyclogyro-Rotoren 3 und 3', der Aufhängung 4 und 4' der Cyclogyro-Rotoren, der äußeren Lagerung 5' und äußeren Offsetverstelleinrichtung 11' und dem Höhen- und Seitenleitwerk 6, 6', 7, 7' und der Ausnehmung 20 in der Aufhängung 4 und 4'.

Fig. 2 zeigt den erfindungsgemäßen Compound-Helikopter in Vorderansicht, mit den beiden lateral angeordneten Cyclogyro-Rotoren 3 und 3', deren Aufhängung 4 und 4', wobei die Aufhängung 4 und 4' auch als Tragfläche oder tragflächenfunktionales Bauteil ausgeführt ist. Im mittleren Bereich ist eine Ausnehmung 20 vorgesehen, die einen Durchtritt von Luft nach unten erleichtert. Die Aufhängung 4, 4' ist einerseits am Fluggeräterumpf 1 und andererseits außen an den Cyclogyro-Rotoren 3, 3' befestigt und hält diese.

Eine Offsetverstelleinrichtung 11 und 11' zur Verstellung der Rotorblätter 9 ist außen an den Cyclogyro-Rotoren 3, 3' angeordnet, die beiden dem Fluggeräterumpf 1 des Helikopters zugewandten Offsetverstelleinrichtung sind nicht sichtbar. Dadurch ist es möglich, die zyklische Verstellung der Rotorblätter 9 von zwei Seiten vorzunehmen und den Antrieb des Rotors 3, 3' von der dem Fluggeräterumpf 1 des Helikopters zugewendeten Seite zu vorzusehen. Es ist vorgesehen, dass die Cyclogyro-Rotoren 3, 3' eine Länge in Axialrichtung (d.h. einen Abstand vom Fluggeräterumpf 1 zur äußeren Begrenzung) aufweisen, die etwa dem Durchmesser der Cyclogyro-Rotoren 3, 3' entspricht und vorzugsweise zwischen 80% und 120% des Durchmessers beträgt.

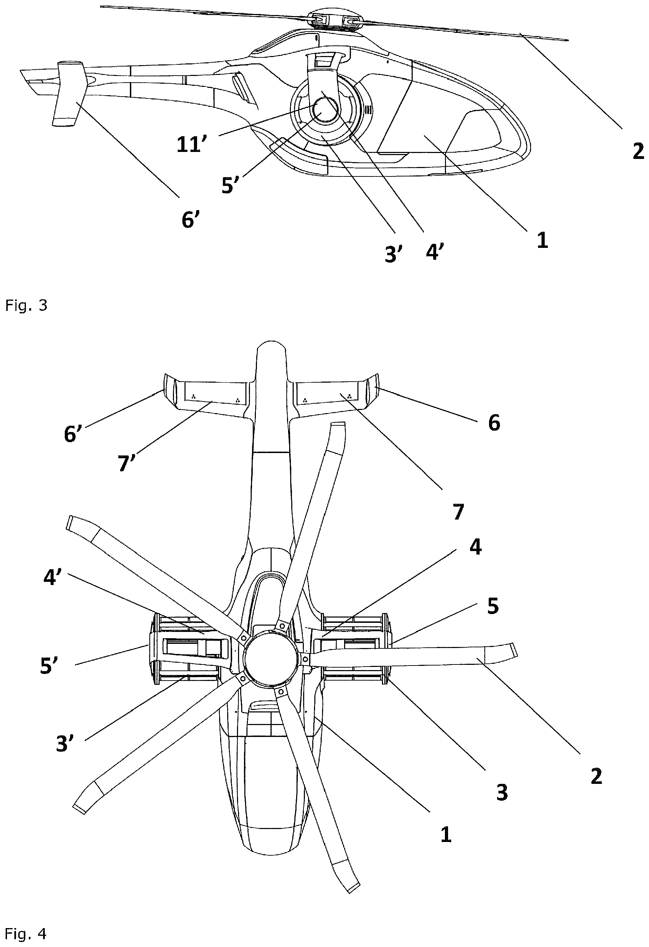

Fig. 3 zeigt den erfindungsgemäßen Compound-Helikopter in Seitenansicht, mit dem lateral angeordneten Cyclogyro-Rotor 3', dessen Aufhängung 4', wobei die Aufhängung auch als Tragfläche oder tragflächenfunktionales Bauteil ausgeführt sein kann, der äußerer Rotorlagerung 5' und äußerer Offsetverstelleinrichtung 11' und dem Seitenleitwerk 6.

Aus Fig. 4 ist insbesondere das Höhen- und Seitenleitwerk 6, 6', 7, 7' ersichtlich.

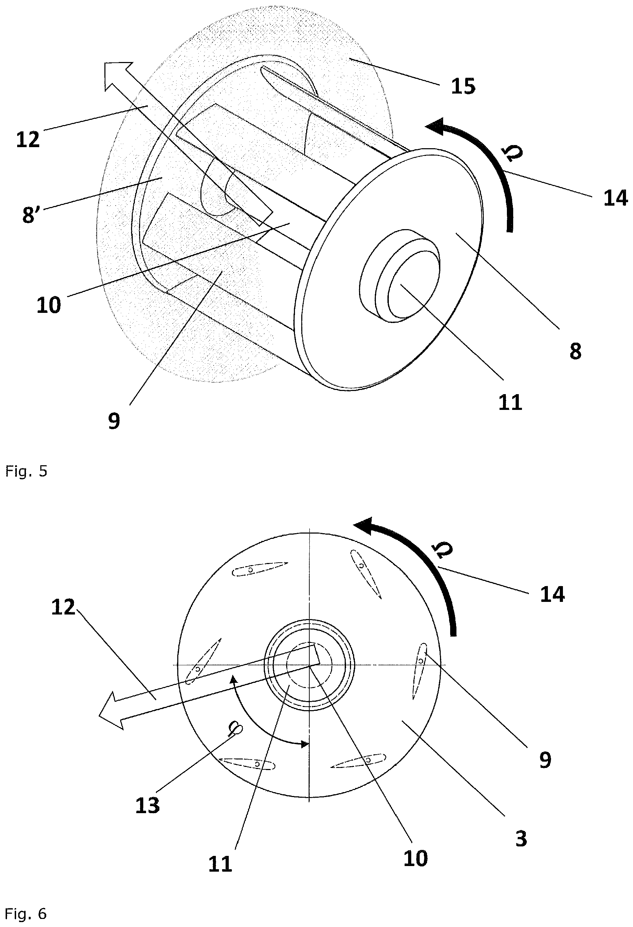

Fig. 5 zeigt den rechten Cyclogyro-Rotor 3 von Fig. 2 in einer Schrägansicht, bestehend im Wesentlichen aus der Rotorachse 10, den Rotorblättern 9 (vorzugsweise drei bis sechs), den beiden Rotorscheiben 8 und 8' mit integrierter Rotorblattlagerung, der seitlichen, dem Helikopterfluggeräterumpf abgewandten Offsetverstelleinrichtung 11 zur Beeinflussung des zyklischen Rotorblattanstellwinkels und der Richtung des Schubvektors 12, der in einer Ebene 15 senkrecht zur Rotordrehachse 10 in jede beliebige Richtung und Größe gesteuert werden kann, wenn der Cyclogyro-Rotor 3 mit entsprechender Drehzahl gemäß Drehrichtung 14 in Rotation gehalten wird.

Fig. 6 zeigt den Cyclogyro-Rotor 3 in Seitenansicht, wobei mit dem Winkel ϕ die Richtung 13 des Schubvektors 12 angegeben ist, und Ω die Drehrichtung 14 des Cyclogyro-Rotors.

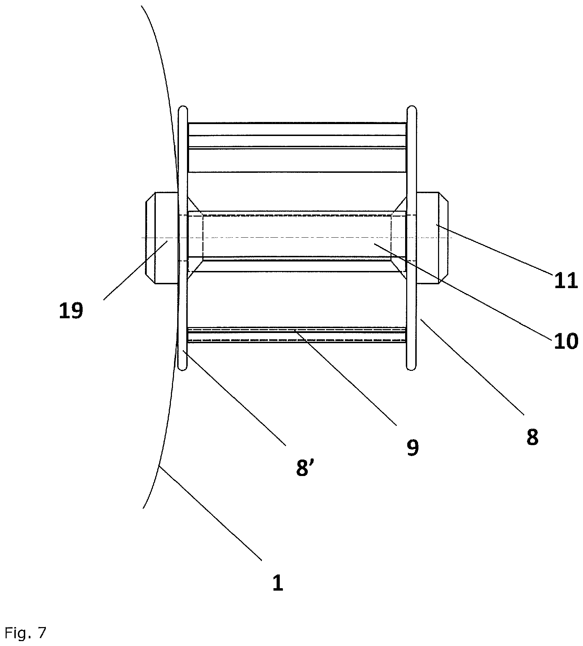

Fig. 7 zeigt den rechten Cyclogyro-Rotor 3 von Fig. 2 in Seitenansicht, bestehend im Wesentlichen aus den beiden Rotorscheiben 8 und 8', der Rotorachse 10, den Rotorblättern 9 (vorzugsweise 3 bis 6), der seitlichen, dem Fluggeräterumpf 1 des Helikopters abgewandten Offsetverstelleinrichtung 11 und der dem Fluggeräterumpf 1 des Helikopters zugewandten Offseteinheit 19 zur Beeinflussung des zyklischen Rotorblattanstellwinkels und der Richtung des Schubvektors.

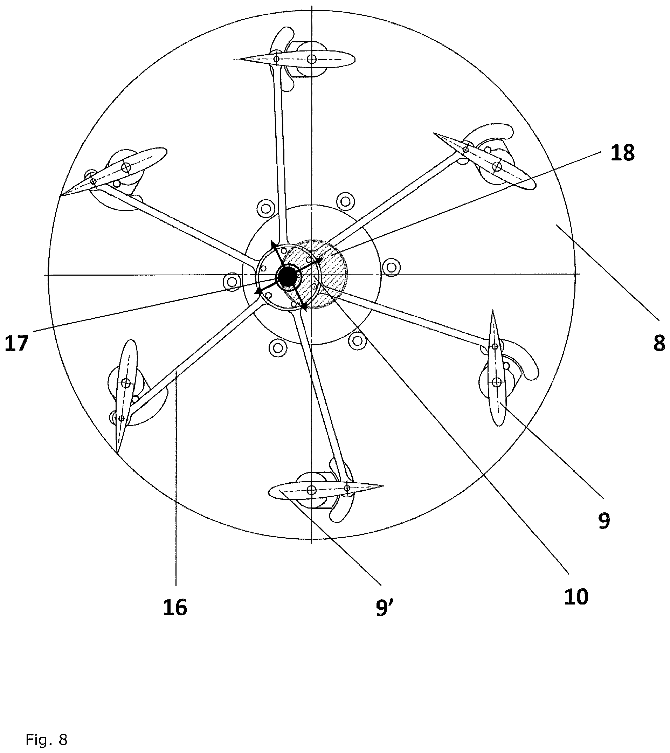

Fig. 8 zeigt die sich in den Rotorscheiben 8 mit der Offsetverstelleinrichtung 11 verbundenen zyklischen Rotorblattanstellvorrichtungen 16. Durch Verschiebung des zentralen Offsetpunktes 17 innerhalb einer Kreisfläche 18 werden entsprechend dem Abstand und der Richtung des Offsetpunktes 17 von der Drehachse 10 des Rotors die Größe des Schubvektors und die Richtung des Schubvektors definiert.

## Patentansprüche

1. Fluggerät, ausgeführt als Compound-Helikopter mit einem Fluggeräterumpf (1), einem am Fluggeräterumpf (1) angeordneten Hauptrotor (2) und mit seitlich vom Fluggeräterumpf (1) abstehenden Cyclogyro-Rotoren (3, 3') mit einer äußeren Stirnfläche, **dadurch gekennzeichnet, dass** die Cyclogyro-Rotoren (3, 3') mit einer Aufhängevorrichtung (4, 4') mit dem Fluggeräterumpf (1) verbunden sind, die die Cyclogyro-Rotoren (3, 3') jeweils zumindest an einer ihrer beiden äußeren Begrenzungen hält, und dass jeder Cyclogyro-Rotor (3, 3') einzeln und unabhängig vom anderen steuerbar ist und von den Cyclogyro-Rotoren (3, 3') ein Drehmomentausgleich des Hauptrotors (2) durchführbar ist.

2. Fluggerät nach Anspruch 1, **dadurch gekennzeichnet, dass** die Aufhängevorrichtung (4, 4') als Tragflügel ausgeführt ist, um im Vorwärtsflug Auftrieb zu erzeugen.

3. Fluggerät nach einem der Ansprüche 1 bis 2, **dadurch gekennzeichnet, dass** die Aufhängevorrichtung (4, 4') oberhalb der Cyclogyro-Rotoren (3, 3') angeordnet ist.

4. Fluggerät nach einem der Ansprüche 1 bis 3, **dadurch gekennzeichnet, dass** die Aufhängevorrichtung (4, 4') eine Ausnehmung (20) unmittelbar oberhalb der Cyclogyro-Rotoren (3, 3') aufweist.

5. Fluggerät nach einem der Ansprüche 1 bis 4, **dadurch gekennzeichnet, dass** die Cyclogyro-Rotoren (3, 3') jeweils mindestens eine Offsetverstelleinrichtung (11, 11') aufweisen, die im Bereich zumindest einer ihrer beiden äußeren Begrenzungen angeordnet ist.

6. Fluggerät nach einem der Ansprüche 1 bis 5, **dadurch gekennzeichnet, dass** die Cyclogyro-Rotoren (3, 3') über ein Getriebe mit dem Antrieb des Hauptrotors (2) in Verbindung stehen.

7. Fluggerät nach einem der Ansprüche 1 bis 6, **dadurch gekennzeichnet, dass** die Cyclogyro- Rotoren (3, 3') einen vom Hauptrotor (2) unabhängigen Antrieb aufweisen, der elektrisch, hydraulisch oder als eigenes Antriebsaggregat ausgebildet ist.

8. Fluggerät nach einem der Ansprüche 1 bis 7, **dadurch gekennzeichnet, dass** ein Höhen-und Seitenleitwerk (6, 6', 7, 7') zur Stabilisierung vorgesehen ist.

9. Fluggerät nach einem der Ansprüche 1 bis 8, **dadurch gekennzeichnet, dass** die Cyclogyro-Rotoren (3, 3') unterhalb des Hauptrotors (2) angeordnet sind.

10. Fluggerät nach einem der Ansprüche 1 bis 9, **dadurch gekennzeichnet, dass** die Cyclogyro- Rotoren (3, 3') zwischen einer Stellung, in der Schub nach unten erzeugt wird und einer Stellung, in der Schub nach hinten erzeugt wird, verstellbar sind.

11. Fluggerät nach einem der Ansprüche 1 bis 10, **dadurch gekennzeichnet, dass** die Cyclogyro-Rotoren (3, 3') eine Länge in Axialrichtung aufweisen, die etwa dem Durchmesser entspricht und vorzugsweise zwischen 80% und 120% des Durchmessers beträgt.

12. Fluggerät nach einem der Ansprüche 1 bis 11, **dadurch gekennzeichnet, dass** das Fluggerät keinen Heckrotor aufweist.

## Claims

1. An aircraft, designed as a compound helicopter, comprising an aircraft fuselage (1), a main rotor (2) arranged on the aircraft fuselage (1) and cyclogyro rotors (3, 3') protruding laterally from the aircraft fuselage (1) and comprising an outer end surface, **characterized in that** the cyclogyro rotors (3, 3') are connected to the aircraft fuselage (1) by means of a suspension device (4, 4') holding the cyclogyro rotors (3, 3') at least at one of their two outer borders, and that each cyclogyro rotor (3, 3') can be controlled individually and independently of the other, and that a torque balance of the main rotor (2) can be performed by the cyclogyro rotors (3, 3').

2. The aircraft according to claim 1, **characterized in that** the suspension device (4, 4') is designed as a wing so as to generate lift in forward flight.

3. The aircraft according to any of claims 1 to 2, **characterized in that** the suspension device (4, 4') is arranged above the cyclogyro rotors (3, 3').

4. The aircraft according to any of claims 1 to 3, **characterized in that** the suspension device (4, 4') comprises a recess (20) directly above the cyclogyro rotors (3, 3').

5. The aircraft according to any of claims 1 to 4, **characterized in that** the cyclogyro rotors (3, 3') each comprise at least one offset adjustment means (11, 11') which is arranged in the region of at least one of their two outer borders.

6. The aircraft according to any of claims 1 to 5, **characterized in that** the cyclogyro rotors (3, 3') are connected to the drive of the main rotor (2) by means of a gear.

7. The aircraft according to any of claims 1 to 6, **characterized in that** the cyclogyro rotors (3, 3') comprise a drive which is independent of the main rotor (2), wherein said drive is electrical, hydraulic or is implemented as an individual drive unit.

8. The aircraft according to any of claims 1 to 7, **characterized in that** horizontal and vertical stabilizers (6, 6', 7, 7') for stabilization are provided.

9. The aircraft according to any of claims 1 to 8, **characterized in that** the cyclogyro rotors (3, 3') are arranged below the main rotor (2).

10. The aircraft according to any of claims 1 to 9, **characterized in that** the cyclogyro rotors (3, 3') are adjustable between a position in which the thrust is generated downwards and a position in which the thrust is generated backwards.

11. The aircraft according to any of claims 1 to 10, **characterized in that** the cyclogyro rotors (3, 3') have a length in the axial direction which substantially corresponds to the diameter and preferably lies between 80% and 120% of the diameter.

12. The aircraft according to any of claims 1 to 11, **characterized in that** the aircraft does not have any tail rotor.

## Revendications

1. Aéronef réalisé en tant qu'hélicoptère hybride, comprenant un fuselage d'aéronef (1), un rotor principal (2) monté sur le fuselage d'aéronef (1) et des rotors cycloïdaux (3, 3') faisant saillie latéralement du fuselage d'aéronef (1) et dotés d'une surface frontale extérieure, **caractérisé en ce que** les rotors cycloïdaux (3, 3') sont reliés au fuselage d'hélicoptère au moyen d'un dispositif de suspension (4, 4') qui maintient les rotors cycloïdaux (3, 3') par au moins l'une de leurs deux délimitations extérieures, et **en ce que** chaque rotor cycloïdal (3, 3') peut être commandé individuellement et indépendamment de l'autre et les rotors cycloïdaux (3, 3') permettent de compenser le couple du rotor principal (2).

2. Aéronef selon la revendication 1, **caractérisé en ce que** le dispositif de suspension (4, 4') est réalisé en tant qu'aile porteuse afin de créer de la portance en vol en marche avant.

3. Aéronef selon l'une des revendications 1 et 2, **caractérisé en ce que** le dispositif de suspension (4, 4') est placé au-dessus des rotors cycloïdaux (3, 3').

4. Aéronef selon l'une des revendications 1 à 3, **caractérisé en ce que** le dispositif de suspension (4, 4') présente un évidement (20) directement au-dessus des rotors cycloïdaux (3, 3').

5. Aéronef selon l'une des revendications 1 à 4, **caractérisé en ce que** les rotors cycloïdaux (3, 3') présentent chacun au moins un dispositif de réglage du décalage (11, 11') situé dans la zone d'au moins l'une de leurs deux délimitations extérieures.

6. Aéronef selon l'une des revendications 1 à 5, **caractérisé en ce que** les rotors cycloïdaux (3, 3') sont reliés au moteur du rotor principal (2) par le biais d'une boîte de transmission.

7. Aéronef selon l'une des revendications 1 à 6, **caractérisé en ce que** les rotors cycloïdaux (3, 3') présentent un moteur indépendant du rotor principal, qui est électrique, hydraulique ou réalisé en tant que groupe motopropulseur indépendant.

8. Aéronef selon l'une des revendications 1 à 7, **caractérisé en ce que** sont prévus une dérive et un plan fixe horizontal (6, 6', 7, 7') pour assurer la stabilité.

9. Aéronef selon l'une des revendications 1 à 8, **caractérisé en ce que** les rotors cycloïdaux (3, 3') sont situés sous le rotor principal (2).

10. Aéronef selon l'une des revendications 1 à 9, **caractérisé en ce que** les rotors cycloïdaux (3, 3') sont réglables entre une position créant une poussée vers le bas et une position créant une poussée vers l'arrière.

11. Aéronef selon l'une des revendications 1 à 10, **caractérisé en ce que** les rotors cycloïdaux (3, 3') présentent une longueur axiale correspondant à peu près au diamètre et équivalant, de préférence, à entre 80 % et 120 % du diamètre.

12. Aéronef selon l'une des revendications 1 à 11, **caractérisé en ce que** l'aéronef ne présente pas de rotor arrière.
